# EUROPEAN PATENT SPECIFICATION

(11) **EP 2 606 971 B1**
(45) Date of publication and mention of the grant of the patent: **29.03.2017**
(21) Application number: 11818136.1
(22) Date of filing: 11.08.2011
(51) Int. Cl.: B01J 35/10, B01D 53/94, B01J 23/63, F01N 3/28

(54) **OXIDATION CATALYST SUITABLE FOR COMBUSTION OF LIGHT OIL COMPONENT**
OXIDATIONSKATALYSATOR ZUR VERBRENNUNG VON LEICHTÖLKOMPONENTEN
CATALYSEUR D'OXYDATION APPROPRIÉ POUR LA COMBUSTION D'UN COMPOSANT HUILE LÉGÈRE

(30) Priority: 20.08.2010 JP 2010185417
(43) Date of publication of application: 26.06.2013
(73) Proprietor: Mitsui Mining and Smelting Co., Ltd., Shinagawa-ku Tokyo 141-8584 (JP)
(72) Inventor: KOGAWA, Takahiro, Ageo-shi Saitama 362-0025 (JP); ABE, Akira, Ageo-shi Saitama 362-0025 (JP)
(74) Representative: Dossmann, Gérard
(86) International application number: PCT/JP2011/068385
(87) International publication number: WO 2012/023494

(56) References cited:
- EP-A2- 1 020 223
- WO-A1-2006/109417
- GB-A- 2 023 640
- JP-A- 8 312 331
- JP-A- 2004 290 827
- JP-A- 2007 315 274
- JP-A- 2008 272 659
- JP-A- 2009 228 575

## Description

### Technical Field

The present invention relates to an oxidation catalyst and its use in the combustion of a light oil component. More particularly, the present invention relates to an oxidation catalyst which is accommodated in an exhaust gas passage of a diesel engine (hereinafter the oxidation catalyst may be referred to as a "DOC") together with a diesel particulate filter (hereinafter may be referred to as a "DPF") so as to be located upstream of the DPF, and which realizes combustion, at a relatively low temperature, of a light oil component supplied upon regeneration of the DPF.

### Background Art

Exhaust gas discharged from a diesel engine contains particulate matter, and the particulate matter generally contains soot and soluble organic substances. Since the particulate matter causes environmental pollution, removal thereof is an important task.

Emission of particulate matter into the atmosphere is effectively prevented by trapping the particulate matter by means of a DPF provided in an exhaust gas passage. However, the DPF may be clogged with the thus-trapped particulate matter, resulting in an increase in exhaust back pressure. Therefore, in order to avoid such clogging, the thus-trapped particulate matter must be removed for regeneration of the DPF.

When particulate matter trapped in a DPF is heated at a high temperature (about 600°C or higher) in the presence of oxygen, the particulate matter spontaneously combusts and is readily removed from the DPF. However, generally, only the heat from exhaust gas is insufficient for such temperature elevation, and much difficulty is encountered in avoiding clogging of the DPF through complete combustion of the particulate matter. Therefore, hitherto, various methods or means have been proposed for avoiding clogging of the DPF.

In known methods for forcedly regenerating a DPF, a fuel such as light oil is supplied to exhaust gas, and the fuel is combusted in the presence of a DOC to produce a high-temperature gas, whereby particulate matter trapped in the DPF is combusted (see, for example, Patent Documents 1 to 4). Meanwhile, there have been proposed various DOCs which realize combustion of light oil at a relatively low temperature (see, for example, Patent Documents 2 to 4).

### Prior Art Document

### Patent Document

Patent Document 1: Japanese Patent Application Laid-Open (*kokai*) No. H08-312331
Patent Document 2: Japanese Patent Application Laid-Open (*kokai*) No. 2004-290827
Patent Document 3: Japanese Patent Application Laid-Open (*kokai*) No. 2007-315274
Patent Document 4: Japanese Patent Application Laid-Open (*kokai*) No. 2009-228575

Other catalysts are described in EP 1 020 223 and GB 2 023 640. In particular, EP 1 020 223 discloses a catalyst for purifying exhaust gases comprising a carrier containing a porous material based on alumina, and a noble metal supported on the carrier. GB 2 023 640 describes catalysts for reforming hydrocarbon feedstocks to produce aromatic hydrocarbons. They comprise a metal supported on a porous gel of an inorganic substance.

### Summary of the Invention

### Problems to be Solved by the Invention

Although a conventional DOC realizes combustion of light oil at a relatively low temperature at an early stage of use (i.e., before long-term use) of the DOC, the temperature of combustion of light oil tends to be elevated after long-term use of the DOC. In view of the foregoing, an object of the present invention is to provide a DOC which, even after long-term use thereof, is suitable for combustion, at a relatively low temperature, of a light oil component supplied upon regeneration of a DPF, and which exhibits excellent thermal resistance and excellent durability. Means for Solving the Problems

In order to achieve the aforementioned object, the present inventors have conducted extensive studies, and as a result have found that when a DOC is produced by causing a noble metal to be supported on an alumina porous body whose pore size distribution profile, as determined by means of a mercury porosimeter, has a peak falling within a specific range, the DOC realizes combustion, at a relatively low temperature, of a light oil component supplied upon regeneration of a DPF even after long-term use of the DOC. The present invention has been accomplished on the basis of this finding.

Accordingly, the present invention provides a DOC used in the combustion of a light oil component, characterized in that the DOC comprises an alumina porous body whose pore size distribution profile, as determined by means of a mercury porosimeter, has a peak falling within a range of 30 to 55 nm, and a noble metal supported on the surface of the alumina porous body and/or on the inner walls of pores of the alumina porous body, the alumina porous body being an La-stabilized alumina porous body which has a mass ratio Al₂O₃/La₂O₃ ranging from 99/1 to 95/5.

The present invention also provides a DOC product suitable for combustion of a light oil component, characterized in that the DOC product comprises a catalyst support made of a ceramic or metallic material, and the aforementioned DOC of the present invention suitable for combustion of a light oil component, the DOC being supported on the catalyst support.

### Effects of the Invention

The DOC or DOC product of the present invention is used in the combustion, at a relatively low temperature, of a light oil component supplied upon regeneration of a DPF even after long-term use of the DOC or the DOC product. In addition, the DOC or the DOC product exhibits excellent thermal resistance and excellent durability.

### Brief Description of the Drawings

[Fig. 1]

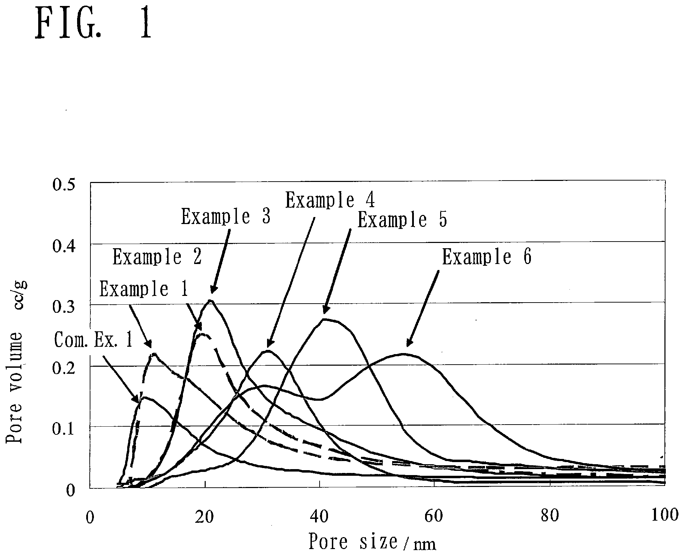

Fig. 1 is a graph showing pore size distributions of La-stabilized θ-aluminas employed in Examples 1 to 6 and Comparative Example 1, the pore size distributions being measured by means of a mercury porosimeter. Modes for Carrying out the Invention

The present invention will next be described in detail.

The DOC of the present invention used in the combustion of a light oil component includes an alumina porous body whose pore size distribution profile, as determined by means of a mercury porosimeter, has a peak falling within a range of 30 to 55 nm, and a noble metal supported on the surface of the alumina porous body and/or on the inner walls of pores of the alumina porous body, the alumina porous body being an La-stabilized alumina porous body which has a mass ratio Al₂O₃/La₂O₃ ranging from 99/1 to 95/5.

In the alumina porous body employed in the present invention, the pore size distribution profile thereof, as determined by means of a mercury porosimeter, has a peak falling within a range of 30 to 55 nm. In the case where a DOC is produced from alumina whose pore size distribution profile, as determined by means of a mercury porosimeter, has a peak falling within a range of less than 10 nm, when the DOC is employed for a long period of time, the temperature of combustion of a light oil component (ignition temperature) through the action of the DOC becomes relatively high; i.e., the DOC becomes unsatisfactory in practical use. Meanwhile, studies have not yet elucidated the behavior of the temperature of combustion of a light oil component (ignition temperature) through the action of a DOC produced from alumina whose pore size distribution profile, as determined by means of a mercury porosimeter, has a peak falling within a range of more than 100 nm, in the case where the DOC is employed for a long period of time.

The present invention may employ porous bodies formed of various aluminas, such as a-alumina, γ-alumina, and θ-alumina. The alumina porous body employed preferably has a specific surface area of about 100 to about 200 m²/g. A porous body formed of La-stabilized (La₂O₃-stabilized) alumina is employed. In the La-stabilized alumina porous body, the ratio by mass of Al₂O₃/La₂O₃ is 99/1 to 95/5, preferably 97/3 to 95/5.

As is clear from the Examples and Comparative Example described hereinbelow, the DOC of the present invention used in the combustion of a light oil component employs an La-stabilized alumina porous body whose pore size distribution profile, as determined by means of a mercury porosimeter, has a peak falling within a range of 30 to 55 nm. When a DOC is produced from an La-stabilized alumina porous body whose pore size distribution profile has a peak falling within such a range, even when the DOC is employed for a long period of time, the temperature of combustion of a light oil component (ignition temperature) through the action of the DOC remains relatively low.

When a DOC is produced from an alumina porous body whose pore size distribution profile, as determined by means of a mercury porosimeter, has a peak falling within a range of 30 to 55 nm, when a noble metal (e.g., at least one noble metal selected from among Pt, Pd, Rh, Ag, Au, Ru, and Ir) is caused to be supported on the surface of the alumina porous body and/or on the inner walls of pores of the alumina porous body, the temperature of combustion of a light oil component (ignition temperature) through the action of the DOC after long-term use thereof remains relatively low. Preferably, at least one noble metal selected from among Pt, Pd, and Rh is caused to be supported on the alumina porous body.

When the DOC of the present invention suitable for combustion of a light oil component is employed in an exhaust gas passage of a diesel engine, the DOC is provided in the form of a DOC product; i.e., the DOC is supported on a catalyst support made of a ceramic or metallic material. The amount of the DOC supported is preferably 30 to 250 g/L, more preferably 50 to 200 g/L. The amount of a noble metal supported is preferably 1 to 4 g/L, more preferably 1.5 to 3.5 g/L. In the DOC product of the present invention, no particular limitation is imposed on the shape of the catalyst support made of a ceramic or metallic material, and the support is generally in the form of aggregate of communicating cells whose cross section assumes, for example, a rectangular, triangular, or honeycomb shape, ceramic foam, wire mesh, metallic foam, plate, pellet, etc., preferably in the form of honeycomb. Examples of the material of the catalyst support include ceramic materials such as alumina (Al₂O₃), mullite (3Al₂O₃-2SiO₂), cordierite (2MgO-2Al₂O₃-5SiO₂), and silicon carbide (SiC); and metallic materials such as stainless steel.

The DOC product of the present invention may contain, in addition to the aforementioned supported DOC, a porous material (e.g., an oxidation-promoting material such as ZrO₂ or CeO₂, or an HC-adsorbing material such as zeolite or silicate). A porous material (e.g., an oxidation-promoting material such as ZrO₂ or CeO₂, or an HC-adsorbing material such as zeolite or silicate) may be caused to be supported on the catalyst support made of a ceramic or metallic material, and the DOC may be caused to be supported on the thus-formed layer of the porous material, to thereby produce a multilayer DOC product.

In the DOC product of the present invention, the pore size distribution profile of the alumina porous body has a peak falling within a range of 30 to 55 cm, and the pore size distribution profile of pores formed between aggregated particles has a peak falling within a range of 500 nm or more.

The DOC of the present invention used in the combustion of a light oil component is accommodated particularly in an exhaust gas passage of a diesel engine together with a DPF so as to be located upstream of the DPF, and realizes combustion, at a relatively low temperature, of a light oil component supplied upon regeneration of the DPF.

The DPF employed may be any known one, and may be a catalyzed DPF. For example, the DPF employed may be formed by coating a porous ceramic material (e.g., cordierite) with, for example, alumina, and causing a noble metal (e.g., Pt, Pd, or Rh) to be supported on the alumina-coated porous material.

For supply of light oil into an exhaust gas passage, the exhaust gas passage may be provided with a light oil injection valve so that light oil whose amount is adjusted is injected therethrough.

Light-oil-containing exhaust gas combusts in the presence of the DOC of the present invention to produce a high-temperature gas, and particulate matter deposited on a DPF combusts through supply of the high-temperature gas to the DPF, whereby the particulate matter is gasified and removed. Thus, the DPF is regenerated.

### Examples 1-3 (not according to the invention) and 4-6 (according to the invention) and Comparative Example 1

An aqueous dinitrodiammine platinum solution (specific amount) and an aqueous palladium nitrate solution (specific amount) were added to a mixture of a porous La-stabilized θ-alumina material (180 g) having a pore size distribution profile peak shown in Table 1 (as determined by means of a mercury porosimeter), containing 4 mass% La₂O₃, and having a specific surface area of 150 m²/g, alumina sol (alumina concentration: 20 mass%) (100 g), and pure water (320 g), and the resultant mixture was stirred for 30 minutes, to thereby prepare a catalyst coating slurry. The coating slurry was applied to a cordierite honeycomb substrate having a diameter of 143.8 mm and a length of 76.2 mm (300 cells/inch², wall thickness: 8 mm), and excess slurry was removed through air blowing. Subsequently, drying was carried out at 120°C for three hours, and then firing was carried out in air at 500°C for one hour. In the resultant DOC product, the amount of the catalyst supported on the cordierite honeycomb substrate was found to be 100 g on the basis of 1 L of the substrate. The amounts of supported Pt and supported Pd were found to be 1.6 g/L and 0.4 g/L, respectively.

Fig. 1 shows pore size distributions of La-stabilized aluminas employed in Examples 1-3 (not according to the invention) and 4-6 (according to the invention) and Comparative Example 1, the pore size distributions being measured by means of a mercury porosimeter.

Each of the DOC products produced in Examples 1-3 (not according to the invention) and 4-6 (according to the invention) and Comparative Example 1 was employed before thermal treatment (i.e., initial DOC product), and employed after thermal treatment in an electric furnace at 750°C for 100 hours (i.e., thermally treated DOC product). As described below, the temperature at the initiation of combustion of light oil (ignition temperature) was measured by use of exhaust gas discharged from an actual engine in the presence of the initial DOC product or the thermally treated DOC product.

The load of a dynamometer connected to a turbo diesel engine (2.4 L) was varied while the rotation speed of the engine was maintained at 1,050 rpm, to thereby adjust the temperature of exhaust gas to different temperatures at the inlet of the DOC product. At the different temperatures, JIS No. 2 light oil was injected at 0.97 L/h for five minutes, and the temperature of exhaust gas was measured at the outlet of the DOC product, to thereby evaluate combustion performance. The lowest temperature of exhaust gas at the inlet of the DOC product when combustion was confirmed was regarded as ignition temperature. The measurement results are shown in Table 1.
[Table 1]

**Table 1**

| | Comparative Example | Example | | | | | |
|---|---|---|---|---|---|---|---|
| | 1 | 1 | 2 | 3 | 4 | 5 | 6 |
| Pore size distribution profile peak, nm | 9 | 11 | 19 | 21 | 31 | 41 | 55 |
| Ignition temperature in the presence of initial DOC product, °C | 182 | 181 | 180 | 180 | 180 | 180 | 180 |
| Ignition temperature in the presence of DOC product treated at 750°C for 100 h, °C | 230 | 205 | 203 | 200 | 196 | 192 | 190 |

As is clear from the data shown in Table 1, the DOC product of the present invention, which includes an alumina porous body whose pore size distribution profile, as determined by means of a mercury porosimeter, has a peak falling within a range of 30 to 55 nm, exhibits excellent performance in terms of light oil ignition even after treatment at 750°C for 100 hours.

## Claims

1. Use of an oxidation catalyst for combustion of a light oil component, **characterized in that** the catalyst comprises an alumina porous body whose pore size distribution profile, as determined by means of a mercury porosimeter, has a peak falling within a range of 30 to 55 nm, and a noble metal supported on the surface of the alumina porous body and/or on the inner walls of pores of the alumina porous body, the alumina porous body being an La-stabilized alumina porous body which has a mass ratio Al₂O₃/La₂O₃ ranging from 99/1 to 95/5.

2. Use according to claim 1, wherein the noble metal is at least one species selected from among Pt, Pd, and Rh.

3. Use of an oxidation catalyst product for combustion of a light oil component, **characterized in that** the catalyst product comprises a catalyst support made of a ceramic or metallic material, and an oxidation catalyst as recited in claim 1 or 2 , the oxidation catalyst being supported on the catalyst support.

4. Use according to claim 1, 2 or 3, **characterized in that** the oxidation catalyst is accommodated in an exhaust gas passage of a diesel engine together with a diesel particulate filter so as to be located upstream of the diesel particulate filter.

5. An oxidation catalyst for combustion of a light oil component, **characterized in that** the catalyst comprises an alumina porous body whose pore size distribution profile, as determined by means of a mercury porosimeter, has a peak falling within a range of 30 to 55 nm, and a noble metal supported on the surface of the alumina porous body and/or on the inner walls of pores of the alumina porous body, the alumina porous body being an La-stabilized alumina porous body which has a mass ratio Al₂O₃/La₂O₃ ranging from 99/1 to 95/5.

6. An oxidation catalyst for combustion of a light oil component according to claim 5, wherein the noble metal is at least one species selected from among Pt, Pd, and Rh.

7. An oxidation catalyst product for combustion of a light oil component, **characterized in that** the catalyst product comprises a catalyst support made of a ceramic or metallic material, and an oxidation catalyst as recited in claim 5 or 6, the oxidation catalyst being supported on the catalyst support.

## Patentansprüche

1. Verwendung eines Oxidationskatalysators zur Verbrennung einer Leichtölkomponente, **dadurch gekennzeichnet, dass** der Katalysator einen porösen Aluminiumoxid-Körper umfasst, dessen Porengrößenverteilungsprofil, ermittelt mit einem Quecksilberporosimeter, ein in einen Bereich von 30 bis 55 nm fallendes Maximum hat, und ein auf der Oberfläche des porösen Aluminiumoxid-Körpers und/oder auf den Innenwänden von Poren des porösen Aluminiumoxid-Körpers getragenes Edelmetall, wobei der poröse Aluminiumoxid-Körper ein mit Lanthan stabilisierter poröser Aluminiumoxid-Körper ist, der ein Massenverhältnis Al₂O₃/La₂O₃ im Bereich von 99:1 bis 95:5 besitzt.

2. Verwendung nach Anspruch 1, wobei das Edelmetall mindestens eine aus Pt, Pd und Rh ausgewählte Art ist.

3. Verwendung eines Oxidationskatalysatorprodukts zur Verbrennung einer Leichtölkomponente, **dadurch gekennzeichnet, dass** das Katalysatorprodukt einen Katalysatorträger aus einem keramischen oder metallischen Material umfasst, und eines Oxidationskatalysators nach Anspruch 1 oder 2, wobei der Oxidationskatalysator auf dem Katalysatorträger getragen wird.

4. Verwendung nach Anspruch 1, 2 oder 3, **dadurch gekennzeichnet, dass** der Oxidationskatalysator in einem Abgaskanal eines Dieselmotors zusammen mit einem Dieselpartikelfilter untergebracht ist, so dass er sich stromaufwärts von dem Dieselpartikelfilter befindet.

5. Oxidationskatalysator zur Verbrennung einer Leichtölkomponente, **dadurch gekennzeichnet, dass** der Katalysator einen porösen Aluminiumoxid-Körper umfasst, dessen Porengrößenverteilungsprofil, ermittelt mit einem Quecksilberporosimeter, ein in einen Bereich von 30 bis 55 nm fallendes Maximum hat, und ein auf der Oberfläche des porösen Aluminiumoxid-Körpers und/oder auf den Innenwänden von Poren des porösen Aluminiumoxid-Körpers getragenes Edelmetall, wobei der poröse Aluminiumoxid-Körper ein mit Lanthan stabilisierter poröser Aluminiumoxid-Körper ist, der ein Massenverhältnis Al₂O₃/La₂O₃ im Bereich von 99:1 bis 95:5 besitzt.

6. Oxidationskatalysator zur Verbrennung einer Leichtölkomponente nach Anspruch 5, wobei das Edelmetall mindestens eine aus Pt, Pd und Rh ausgewählte Art ist.

7. Oxidationskatalysatorprodukt zur Verbrennung einer Leichtölkomponente, **dadurch gekennzeichnet, dass** das Katalysatorprodukt einen Katalysatorträger aus einem keramischen oder metallischen Material umfasst, und ein Oxidationskatalysator nach Anspruch 5 oder 6, wobei der Oxidationskatalysator auf dem Katalysatorträger getragen wird.

## Revendications

1. Utilisation d'un catalyseur d'oxydation pour la combustion d'un composant de type huile légère, **caractérisée en ce que** le catalyseur comporte un corps poreux en alumine dont le profil de distribution des tailles des pores, déterminé par porosimétrie au mercure, présente un pic situé dans l'intervalle allant de 30 à 55 nm, et un métal noble supporté, déposé sur la surface du corps poreux en alumine et/ou sur les parois internes des pores du corps poreux en alumine, lequel corps poreux en alumine est un corps poreux en alumine stabilisée avec du lanthane, qui présente un rapport massique Al₂O₃/La₂O₃ valant de 99/1 à 95/5.

2. Utilisation conforme à la revendication 1, pour laquelle le métal noble est au moins un métal choisi parmi le platine, le palladium et le rhodium.

3. Utilisation d'un produit catalyseur d'oxydation pour la combustion d'un composant de type huile légère, **caractérisée en ce que** le produit catalyseur comporte un support de catalyseur, fait d'un matériau métallique ou céramique, et un catalyseur d'oxydation tel que défini dans la revendication 1 ou 2, lequel catalyseur d'oxydation est supporté par le support de catalyseur.

4. Utilisation conforme à la revendication 1, 2 ou 3, **caractérisée en ce que** le catalyseur d'oxydation est placé dans un passage pour gaz d'échappement d'un moteur diesel, conjointement avec un filtre à particules diesel, de manière à être situé en amont du filtre à particules diesel.

5. Catalyseur d'oxydation pour la combustion d'un composant de type huile légère, **caractérisé en ce que** le catalyseur comporte un corps poreux en alumine dont le profil de distribution des tailles des pores, déterminé par porosimétrie au mercure, présente un pic situé dans l'intervalle allant de 30 à 55 nm, et un métal noble supporté, déposé sur la surface du corps poreux en alumine et/ou sur les parois internes des pores du corps poreux en alumine, lequel corps poreux en alumine est un corps poreux en alumine stabilisée avec du lanthane, qui présente un rapport massique Al₂O₃/La₂O₃ valant de 99/1 à 95/5.

6. Catalyseur d'oxydation pour la combustion d'un composant de type huile légère, conforme à la revendication 5, dans lequel le métal noble est au moins un métal choisi parmi le platine, le palladium et le rhodium.

7. Produit catalyseur d'oxydation pour la combustion d'un composant de type huile légère, **caractérisé en ce que** le produit catalyseur comporte un support de catalyseur, fait d'un matériau métallique ou céramique, et un catalyseur d'oxydation tel que défini dans la revendication 5 ou 6, lequel catalyseur d'oxydation est supporté par le support de catalyseur.
